# EUROPEAN PATENT APPLICATION

(11) **EP 4 607 391 A1**
(43) Date of publication of application: **27.08.2025**
(21) Application number: 23885755.1
(22) Date of filing: 31.10.2023
(51) Int. Cl.: G06F 21/62, G06F 21/31, G06K 7/10, G06K 17/00

(54) **ACCESS CONTROL SYSTEM, ACCESS CONTROL METHOD, AND ACCESS CONTROL PROGRAM**

(30) Priority: 04.11.2022 JP 2022176906
(71) Applicant: Meet Co., Ltd., Tokyo 154-0016 (JP)
(72) Inventor: KITAMURA, Ken, Tokyo 154-0016 (JP)
(74) Representative: Meissner Bolte Partnerschaft mbB
(86) International application number: PCT/JP2023/039218
(87) International publication number: WO 2024/096001

(57) **Abstract**

In an access control system, a tag management device acquires tag identification information and first unique information from an electronic tag via a reader, acquires second unique information from a one-time ID determination device when a parameter determination device determines that the first unique information is acquired for the first time, and accesses an access destination device of the second URL corresponding to the tag identification information by adding the second unique information to the second URL. The tag management device and the reader are permitted to access the access destination device when the one-time ID determination device determines that the second unique information transmitted by the access destination device is acquired for the first time.

## Description

### TECHNICAL FIELD

The present disclosure relates to an access control system, an access control method, and an access control program.

### BACKGROUND ART

In recent years, near field communication using an electronic tag such as a near field communication (NFC) tag has been used in a wide variety of applications. For example, an electronic tag is provided on or around an advertisement poster or a product so that a web page with information on the product such as an advertisement can be displayed on an information terminal such as a smartphone when the terminal is brought close to the electronic tag. For example, Patent Document 1 discloses a technique for managing such electronic tags.

### CITATION LIST

### PATENT DOCUMENT

Patent Document 1: Japanese Unexamined Patent Publication No. 2013-250934

### SUMMARY OF THE INVENTION

### TECHNICAL PROBLEM

Depending on types of service using the electronic tag, for example, it is sometimes required to allow a service user who visits a place with the electronic tag to access a web page of a specific URL using the electronic tag. Thus, access to an access destination device such as a server is desirably performed when intended by a service provider.

It is an object of the present disclosure to provide an access control system, an access control method, and an access control program that can block unauthorized access.

### SOLUTION TO THE PROBLEM

In order to achieve the object, the present disclosure provides an access control system including: a tag management device that is identified by a first URL and stores tag identification information and a second URL in association with each other; a parameter determination device; an access destination device identified by the second URL; and a one-time ID determination device that issues second unique information to the tag management device. The tag management device acquires the tag identification information and first unique information from an electronic tag via a reader, acquires the second unique information from the one-time ID determination device when the parameter determination device determines that the first unique information is acquired for the first time, and accesses the access destination device of the second URL corresponding to the tag identification information by adding the second unique information to the second URL. The tag management device and the reader are permitted to access the access destination device when the one-time ID determination device determines that the second unique information transmitted by the access destination device is acquired for the first time. The first unique information is unique information issued for each reading process by the reader. The second unique information is unique information issued each time the parameter determination device determines that the first unique information is acquired for the first time.

In order to achieve the object, the present disclosure provides an access control method for an access control system including a tag management device that is identified by a first URL and stores tag identification information and a second URL in association with each other, a parameter determination device, an access destination device identified by the second URL, and a one-time ID determination device that issues second unique information to the tag management device. The access control method includes: allowing the tag management device to acquire the tag identification information and first unique information from an electronic tag via a reader, acquire the second unique information from the one-time ID determination device when the parameter determination device determines that the first unique information is acquired for the first time, and access the access destination device of the second URL corresponding to the tag identification information by adding the second unique information to the second URL; and permitting the tag management device and the reader to access the access destination device when the one-time ID determination device determines that the second unique information transmitted by the access destination device is acquired for the first time. The first unique information is unique information issued for each reading process by the reader. The second unique information is unique information issued each time the parameter determination device determines that the first unique information is acquired for the first time.

In order to achieve the object, the present disclosure provides an access control program to be run on a computer of an access control system including a tag management device that is identified by a first URL and stores tag identification information and a second URL in association with each other, a parameter determination device, an access destination device identified by the second URL, and a one-time ID determination device that issues second unique information to the tag management device. The access control program causes the computer to: acquire the tag identification information and first unique information from an electronic tag via a reader; acquire the second unique information from the one-time ID determination device when the parameter determination device determines that the first unique information is acquired for the first time; access the access destination device of the second URL corresponding to the tag identification information by adding the second unique information to the second URL; and permit the tag management device and the reader to access the access destination device when the one-time ID determination device determines that the second unique information transmitted by the access destination device is acquired for the first time. The first unique information is unique information issued for each reading process by the reader. The second unique information is unique information issued each time the parameter determination device determines that the first unique information is acquired for the first time.

### ADVANTAGES OF THE INVENTION

The access control system, access control method, and access control program with the above features can prevent unauthorized access.

### BRIEF DESCRIPTION OF THE DRAWINGS

[FIG. 1] FIG. 1 is an overall configuration diagram of an access control system according to a first embodiment.
[FIG. 2] FIG. 2 is a configuration diagram of a reader and a tag management device.
[FIG. 3] FIG. 3 is a schematic block diagram showing a configuration of a computer.
[FIG. 4] FIG. 4 is an overall configuration diagram of an access control system according to a second embodiment.
[FIG. 5] FIG. 5 is an overall configuration diagram of an access control system according to a third embodiment.

### DESCRIPTION OF EMBODIMENTS

Embodiments of the present disclosure will be described below. In the present disclosure, an "electronic tag," which is also called an IC tag, an RF tag, or a wireless tag, is a tag using a radio frequency identification (RFID) technology for reading and writing data from and to an IC chip in the tag in a non-contact manner using radio waves. An "NFC tag," which is one of electronic tag standards, is a tag that uses a frequency of 13.56 MHz and enables near field communication in a communication distance of about 10 cm which is relatively shorter than that of other RFID technologies. In the following embodiments, the NFC tag will be described as an example of the electronic tag, but the electronic tag is not limited to the NFC tag. Other electronic tags using near field communication in a similar distance to the NFC tag may be used.

### [First Embodiment]

### <Configuration>

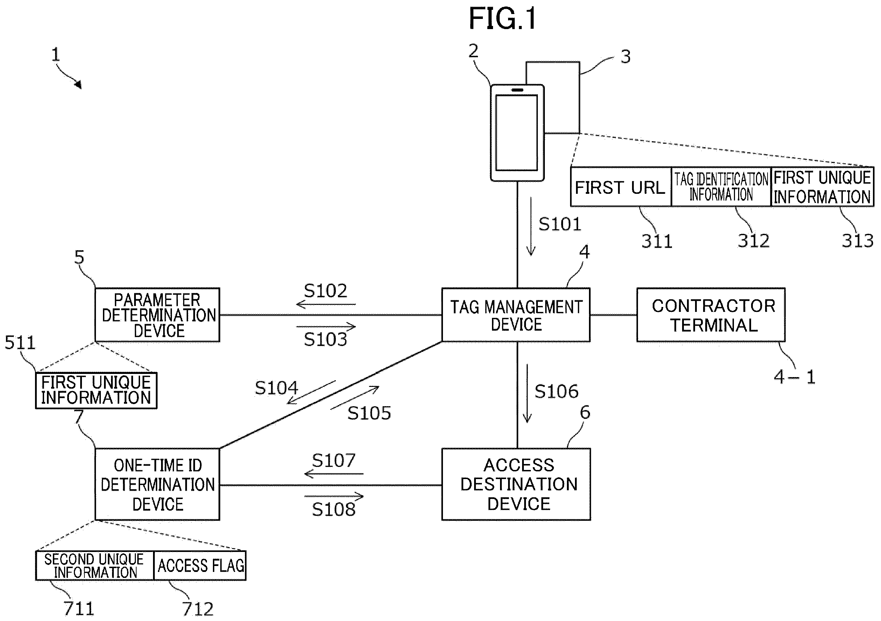

FIG. 1 is an overall configuration diagram of an access control system 1 according to a first embodiment. The access control system 1 connects a reader 2, a tag management device 4, a contractor terminal 4-1, a parameter determination device 5, an access destination device 6 that functions as a web server, and a one-time ID determination device 7 via a communication network such as the Internet.

The reader 2 is an information processing terminal owned by a general customer (an end user) who receives service offered by a contractor. The reader 2 of the present embodiment is assumed to be a smartphone, but may be a different information terminal or device such as a server, a personal computer, a tablet terminal, or a cellphone.

An NFC tag 3 is a passive electronic tag from which the reader 2 (an information terminal) can read information. The NFC tag 3 stores a first URL 311 that identifies the tag management device 4 and tag identification information 312 associated with each NFC tag 3 in a storage unit in an internal integrated circuit (IC). The NFC tag 3 has a function of generating first unique information 313 and allowing the reader 2 to acquire the first unique information 313 when the reader 2 reads the NFC tag 3. The first unique information 313 is unique information issued as a unique value that differs for each process of reading the NFC tag 3 by the reader 2. The first unique information 313 of the present embodiment is a rolling code added to the first URL 311.

The tag management device 4 is an information processing terminal managed by a service provider that provides service using a plurality of NFC tags 3. The tag management device 4 of the present embodiment is assumed to be a server, but may be a different device such as a personal computer, a smartphone, a tablet terminal, or a cellphone. The tag management device 4 is identified by the first URL 311.

The contractor terminal 4-1 is an information processing terminal under management by a contractor who contracted with the service provide. The contractor terminal 4-1 of the present embodiment is assumed to be a personal computer, but may be a different terminal or device such as a server, a tablet terminal, a cellphone, or a smartphone.

The parameter determination device 5 has a function of managing the first unique information 313 acquired when the reader 2 reads the NFC tag 3 as first unique information 511 and controlling access of the reader 2 to the access destination device 6. The parameter determination device 5 of the present embodiment is assumed to be a server, but may be a different device such as a personal computer, a smartphone, a tablet terminal, or a cellphone.

The access destination device 6 is, for example, a general web server identified by a second URL 432 described later and may be managed by the service provider or another person. The access destination device 6 may have a function of a web server as one of its functions. The access destination device 6 stores data of a so-called web page. The web page includes content information such as text, images, and moving images and functions such as an account authentication function and a settlement function.

The one-time ID determination device 7 has a function of issuing second unique information 711 to the tag management device 4. The one-time ID determination device 7 has another function of determining, using the second unique information 711 and an access flag 712, whether the access to the access destination device 6 is directly associated with the operation (process) of reading the NFC tag 3 by the reader 2. The access flag 712 is history data of access of the reader 2 to the access destination device 6, and may be, for example, a counter for counting the number of accesses or an arbitrary value indicating that the reader 2 "accessed." The one-time ID determination device 7 of the present embodiment is assumed to be a server, but may be a different device such as a personal computer, a smartphone, a tablet terminal, or a cellphone.

The reader 2, the tag management device 4, the contractor terminal 4-1, the parameter determination device 5, the access destination device 6, and the one-time ID determination device 7 include some or all of an input unit, a display unit, a communication unit, an information processing unit (a control unit), and a storage unit as appropriate. The reader 2 has a reader function, that is, can acquire tag information when the reader 2 is held over (or in contact with or brought close to) the NFC tag 3. The NFC tag 3 is, for example, a sticker tag, and is attached to an object in a store of a contractor such as a product or a poster. Components of the devices will be described in detail below.

The reader 2 includes a control unit 21, a communication unit 22, a display unit 23, and a storage unit 24. The communication unit 22 has a function of reading information from the NFC tag 3 and a function of communicating with an external device such as the tag management device 4 in a wired or wireless manner. The display unit 23 displays an access screen (e.g., a screen of a web page) of the access destination device 6 identified by the second URL 432 associated with the tag identification information 312 by the tag management device 4.

The storage unit 24 stores reader identification information 241. The reader identification information 241 is, for example, unique information of the reader 2 or user information associated with the reader 2. The storage unit 24 stores a program such as an access control program of the present embodiment.

The tag management device 4 includes a control unit 41, a communication unit 42, and a storage unit 43.

The communication unit 42 has a function of acquiring tag information (the first URL 311, the tag identification information 312, and the first unique information 313) from the reader 2 that reads the tag information from the NFC tag 3 via the communication network. The reader 2 reads the tag information from the NFC tag 3 to acquire the first URL 311, and accesses the tag management device 4 based on the first URL 311. Then, the reader 2 transmits the read tag information, namely, the tag identification information 312 and the first unique information 313, to the tag management device 4.

The control unit 41 has a function of referring to the storage unit 43 and transmitting the second URL 432 associated with the tag identification information 312 acquired by the communication unit 42 to the reader 2. The control unit 41 can also edit (generate, change, or delete) information stored in the storage unit 43.

The storage unit 43 stores information such as the tag identification information 431 and the second URL 432 (redirect information) and the second unique information 433 in association with each other. The storage unit 43 stores a program such as the access control program of the present embodiment.

### <Process Flow>

Next, the operation of the access control system 1 according to the first embodiment will be described with reference to FIG 1. It will be described below an example of the process of reading the NFC tag 3 with a single reader 2. However, if two or more readers 2 are present, each of the readers 2 will perform the reading in the same manner. The process of each of the devices (2, 4 to 7, and 4-1) is executed by the control unit of each of the devices (2, 4 to 7, and 4-1).

In Step S101, the reader 2 acquires the first URL 311, the tag identification information 312, and the first unique information 313 from a single NFC tag 3 using the read function for the NFC tag 3. The reader 2 accesses the tag management device 4 by using the acquired first URL 311 via the communication network. At this time, the reader 2 transmits the tag identification information 312 and the first unique information 313 to the tag management device 4. Thus, the tag management device 4 can acquire the tag identification information 312 and the first unique information 313 from the NFC tag 3 via the reader 2.

In Step S102, the tag management device 4 encrypts the first unique information 313 and transmits the encrypted information to the parameter determination device 5.

In Step S103, the parameter determination device 5 decodes the first unique information 313 transmitted from the tag management device 4, and determines whether the decoded first unique information 313 matches any one of pieces of first unique information 511 stored in the storage unit of the parameter determination device 5. If the first unique information 313 does not match any of the stored first unique information 511, the parameter determination device 5 transmits a determination result "valid" to the tag management device 4, and additionally stores the first unique information 313 as the first unique information 511 in the storage unit. When receiving the determination result "valid," the tag management device 4 executes the process of Step S104.

If the first unique information 313 matches the stored first unique information 511, the parameter determination device 5 transmits a determination result "invalid" to the tag management device 4. When receiving the determination result "invalid," the tag management device 4 suspends the execution of the process of Step S104 and subsequent steps. For the suspension of the process, the tag management device 4 transmits, for example, an output such as a display for indicating an error or a warning to the reader 2 and displays the output on the display unit 23.

In this determination process, the first unique information 313 is generated for each reading process by the reader 2 if the reader 2 accesses the tag management device 4 by reading the NFC tag 3. Thus, the determination result will be "valid." On the other hand, if the reader 2 attempts to access the tag management device 4 without reading the NFC tag 3, for example, by duplicating the first URL 311 and the first unique information 313 from the result of the past reading process or the reading result by a different reader 2, the first unique information 313 matches the first unique information 511 stored in the parameter determination device 5. Thus, the determination result will be "invalid." In this way, the access of the reader 2 to the tag management device 4 without reading the NFC tag 3 is determined to be unauthorized and is denied.

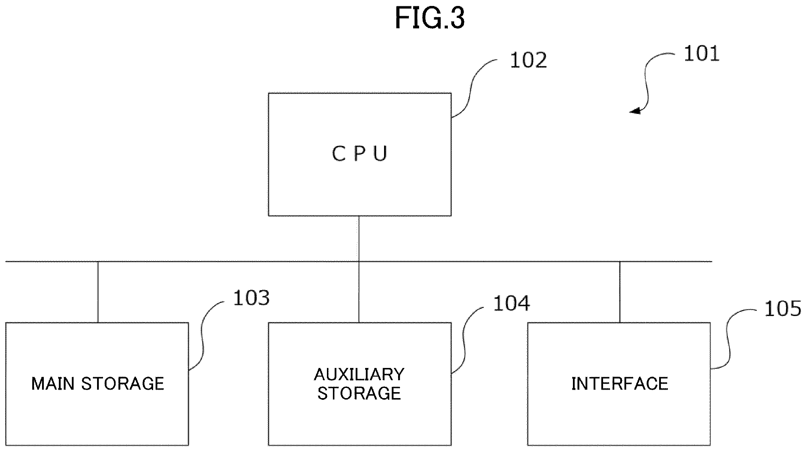

In Step S104, the tag management device 4 transmits a request for the second unique information to the one-time ID determination device 7. The one-time ID determination device 7 that has received the request from the tag management device 4 issues the second unique information 711 (see FIG. 3). The one-time ID determination device 7 stores the issued second unique information 711 in the storage unit. The process of Step S104 is performed on the premise that the first unique information 313 is determined to be "valid" in Step S103. Thus, the second unique information 711 is unique information issued each time the parameter determination device 5 determines that the first unique information 511 is acquired for the first time in Step S103.

In Step S105, the one-time ID determination device 7 transmits the second unique information 711 to the tag management device 4. Thus, the tag management device 4 can acquire the second unique information 711 from the one-time ID determination device 7 when the parameter determination device 5 determines that the first unique information 313 is acquired for the first time.

In Step S106, the tag management device 4 refers to the storage unit 43 and acquires the second URL 432 associated with the tag identification information 312 (431) acquired from the reader 2. The tag management device 4 accesses the access destination device 6 identified by the second URL 432 corresponding to the tag identification information 431. At this time, the second unique information 433 is added to the second URL 432 (i.e., as a URL including the second URL 432 and the second unique information 433) and transmitted to the access destination device 6.

Alternatively, after Step S105, the tag management device 4 transmits the second URL 432 and the second unique information 433 to the reader 2. Thereafter, the reader 2 may access the access destination device 6 which is the redirect destination using the second URL 432 acquired from the tag management device 4.

In Step S107, the access destination device 6 receives the second unique information 433 received from the tag management device 4 (or the reader 2) to the one-time ID determination device 7.

In Step S108, the one-time ID determination device 7 determines whether the second unique information 433 transmitted from the tag management device 4 matches any one of pieces of second unique information 711 stored in the storage unit of the one-time ID determination device 7. If the transmitted second unique information 433 matches the stored second unique information 711, and the access flag 712 corresponding to the second unique information 433 used for the determination indicates that this is the first (initial) reference, the one-time ID determination device 7 transmits the determination result "valid" to the access destination device 6 and sets the access flag 712 to "referred" (or increases the count of references by one). When receiving the determination result "valid," the access destination device 6 permits the access of the reader 2, and allows the reader 2 to display information such as a web page on the display unit 23 of the reader 2 via the tag management device 4 or directly.

If the second unique information 433 does not match any of the stored second unique information 711, or if the second unique information 433 matches the stored second unique information 711 and the access flag 712 corresponding to the second unique information 711 used for the determination indicates that the second unique information has been referred (or referred twice or more), the one-time ID determination device 7 transmits the determination result "invalid" to the access destination device 6. Whether the access flag 712 indicates that the reference has been made twice or more can be determined by whether the access flag 712 indicates a number one or a higher number, or whether the access flag 712 is a value indicating "referred" or "accessed." When receiving the determination result "invalid," the access destination device 6 denies the access of the reader 2 and suspends the execution of the subsequent processes. For the suspension of the process, the access destination device 6 transmits, for example, an output such as a display for indicating an error or a warning to the reader 2 and displays the output on the display unit 23. As described above, if the second unique information 433 transmitted by the access destination device 6 is determined to be the one acquired for the first time, the one-time ID determination device 7 permits the tag management device 4 and the reader 2 to access the access destination device 6.

### (Program)

FIG. 3 is a schematic block diagram showing the configuration of a computer 101. The computer 101 includes a CPU 102, a main storage 103, an auxiliary storage 104, and an interface 105. The CPU 102 may be a GPU.

Details of a program for implementing the functions constituting the tag management device 4 according to the first embodiment will be described below. The same applies to a program of the tag management device 4 according to second and third embodiments.

The reader 2, the tag management device 4, the contractor terminal 4-1, the parameter determination device 5, the access destination device 6 that functions as a web server, and the one-time ID determination device 7 of the present embodiment are implemented in the computer 101. A read timing management device 8 (of a second embodiment) and an access time management device 9 (of a third embodiment), which will be described later, are also implemented in the computer 101. The operation of each component of the devices 2, 4, 4-1, and 5 to 9 is stored in the auxiliary storage 104 in the form of a program. The CPU 102 reads the program from the auxiliary storage 104, develops the program in the main storage 103, and executes the process according to the program. The CPU 102 also secures a storage area corresponding to the storage unit in the main storage 103 according to the program.

Specifically, the program includes a program that causes the computer 101 to acquire the tag identification information 312 and the first unique information 313 from the NFC tag 3 (an electronic tag) via the reader 2, acquire the second unique information 433 from the one-time ID determination device 7 when the parameter determination device 5 determines that the first unique information 313 is acquired for the first time; access the access destination device 6 of the second URL 432 corresponding to the tag identification information 312 by adding the second unique information 433 to the second URL 432; and permit the tag management device 4 and the reader 2 to access the access destination device 6 when the one-time ID determination device 7 determines that the second unique information 433 transmitted by the access destination device 6 is acquired for the first time.

The auxiliary storage 104 is an example of a non-transitory tangible storage medium. Other examples of the non-transitory tangible storage medium include a storage medium such as a magnetic disk, a magneto-optical disk, a CD-ROM, a DVD-ROM, or a semiconductor memory connected via the interface 105.

The program may be a program for achieving some of the functions described above. Further, the program may be a so-called difference file (difference program) that achieves the above-described functions in combination with another program already stored in the auxiliary storage 104.

### [Second Embodiment]

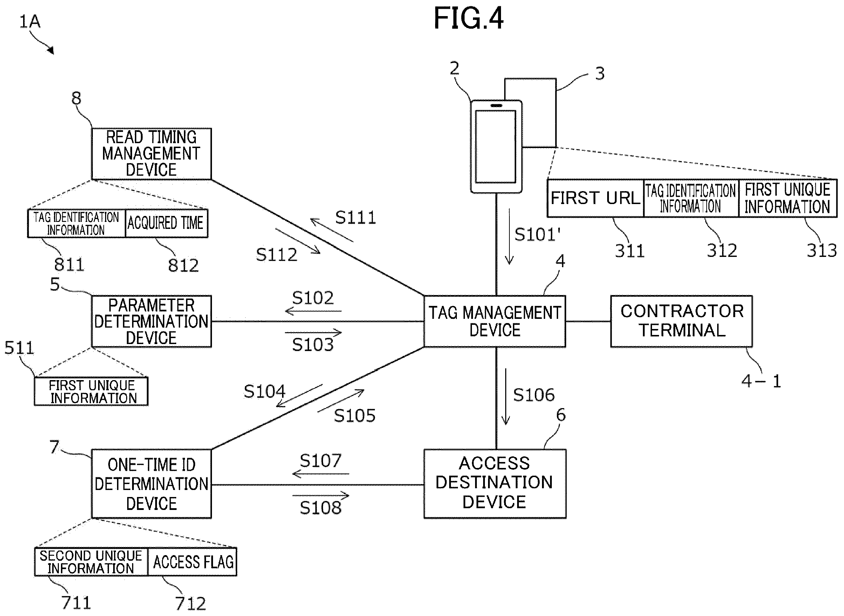

An access control system 1A of a second embodiment will be described below. FIG. 4 is an overall configuration diagram of the access control system 1A of the second embodiment. Components of the access control system 1A that are the same as those of the access control system 1 of the first embodiment will be denoted by the same reference numerals, and the description thereof will be omitted or simplified.

The access control system 1A further includes a read timing management device 8 in addition to the reader 2, the tag management device 4, the parameter determination device 5, the access destination device 6, and the one-time ID determination device 7 described in the first embodiment. The read timing management device 8 stores tag identification information 811 and a read time 812 at which the reader 2 reads the tag identification information 312.

Next, the operation of the access control system 1A according to the second embodiment will be described. The access control system 1A additionally performs processes of Steps S111 and S112 in addition to the processes performed by the access control system 1. Step S101', which is substantially the same process as Step S101, will be described in detail below.

First, in Step S101', the reader 2 acquires tag information (the first URL 311, the tag identification information 312, and the first unique information 313) from the NFC tag 3. The reader 2 accesses the tag management device 4 via the communication network using the first URL 311 included in the acquired tag information. At this time, the reader 2 transmits the tag identification information 312, the first unique information 313, the read time at which the NFC tag 3 was read, and user attribute information of the reader 2 to the tag management device 4. Thus, the tag management device 4 can acquire the tag identification information 312, the first unique information 313, and the read time from the NFC tag 3 via the reader 2. The read time can be acquired from local time (e.g., an internal clock) of the reader 2. The read time may be acquired from local time (e.g., an internal clock) of the tag management device 4. After the process of Step S101', the process of Step S111 is performed.

In Step S111, the tag management device 4 transmits the read time at which the NFC tag 3 was read by the reader 2 to the read timing management device 8. When receiving the tag identification information 312 and the read time from the tag management device 4, the read timing management device 8 stores them as tag identification information 811 and read time 812 in an internal storage unit.

In Step S112, the read timing management device 8 searches the storage unit for the same tag identification information 811 as the currently acquired tag identification information 312. If the same tag identification information 811 as the currently acquired tag identification information 312 is registered, the read timing management device 8 determines whether a predetermined time has passed since when the reader 2 reads the most recently acquired tag identification information 811 at the time the reader 2 reads the currently acquired tag identification information 312. When the read timing management device 8 determines that the predetermined time has passed, the read timing management device 8 transmits a determination result "valid" (or access "permitted") to the tag management device 4. When the read timing management device 8 determines that it is "valid," the processes after Step S102 are executed.

If the read timing management device 8 determines that the predetermined time has not passed, the read timing management device 8 transmits a determination result "invalid" (or access "denied") to the tag management device 4. Thereafter, the execution of the subsequent processes is suspended. For the suspension of the process, the tag management device 4 transmits, for example, an output such as a display for indicating an error or a warning to the reader 2 and displays the output on the display unit 23.

As described above, the tag management device 4 is permitted to access the access destination device 6 if a predetermined time has passed since when the reader 2 reads the most recently acquired tag identification information 431 at the time the reader 2 reads the currently acquired tag identification information 312. The predetermined time for the determination process in Step S112 can be set in advance, dynamically, or in accordance with the mode of the service. The predetermined time used for the determination in Step S112 may be set as elapsed time in days, hours, minutes, or seconds, for example. Alternatively, whether the predetermined time has passed may be whether a preset absolute time point, such as 12 o'clock or 24 o'clock, has passed.

In the access control system 1A of the second embodiment, the NFC tag 3 is placed in a restaurant, for example. When a customer brings the reader 2 close to or into contact with the NFC tag 3, the reader 2 can access the access destination device 6 that gives data of points to the reader 2. In this case, the access control system 1A can deny multiple accesses of the reader 2 to the access destination device 6 when a predetermined time has not passed since the last reading of the NFC tag 3 by the reader 2. This can avoid the offer of points multiple times over the number of visits to the restaurant for a single meal (e.g., breakfast, lunch, or dinner). Thus, the contractor can provide intended service that offers points to a customer for each visit using the access control system 1A.

### [Third Embodiment]

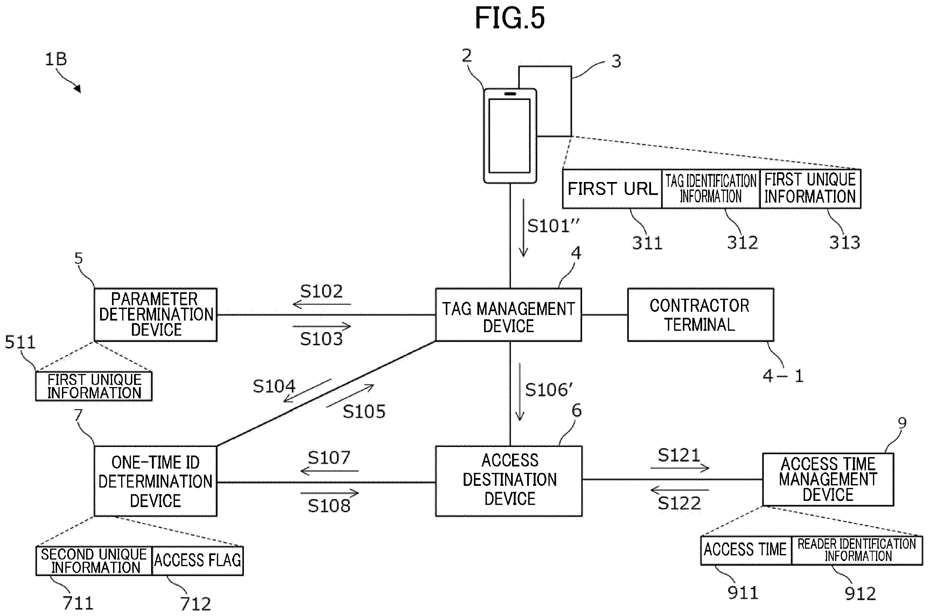

An access control system 1B of a third embodiment will be described. FIG. 5 is an overall configuration diagram of the access control system 1B according to the third embodiment. Components of the access control system 1B that are the same as those of the access control system 1 of the first embodiment will be denoted by the same reference numerals, and the description thereof will be omitted or simplified.

The access control system 1B further includes an access time management device 9 in addition to the reader 2, the tag management device 4, the parameter determination device 5, the access destination device 6, and the one-time ID determination device 7 described in the first embodiment. The access time management device 9 stores an access time 911 at which the reader 2 accesses the access destination device 6, and reader identification information 912 of the reader 2. The access time management device 9 of the present embodiment is installed corresponding to the access destination device 6.

Next, the operation of the access control system 1B according to the third embodiment will be described below. The access control system 1B additionally performs processes of Steps S121 and S122 in addition to the processes performed by the access control system 1.

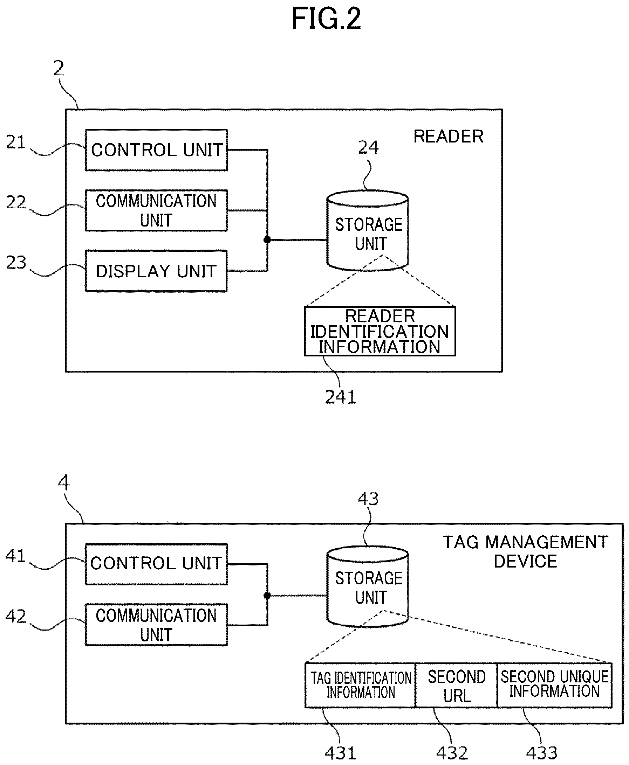

In Step S101", the reader 2 acquires the first URL 311, the tag identification information 312, and the first unique information 313 from a single NFC tag 3. The reader 2 accesses the tag management device 4 by using the acquired first URL 311 via the communication network. At this time, the reader 2 transmits the tag identification information 312, the first unique information 313, and the reader identification information 241 (see FIG. 2) to the tag management device 4.

In Step S106' executed after the process of Step S105, the tag management device 4 refers to the storage unit 43 and acquires the second URL 432 associated with the tag identification information 312 acquired from the reader 2. The tag management device 4 accesses the access destination device 6 of the second URL 432 corresponding to the tag identification information 312 by adding the second unique information 711 to the second URL 432. In Step S106', the tag management device 4 transmits the reader identification information 241 (see FIG. 2) of the reader 2 to the access destination device 6.

Subsequently, the processes of Steps S107 and S108 are performed. When the access destination device 6 receives the determination result "valid" in Step S108, the process of Step S121 is performed. If the access destination device 6 receives the determination result "invalid," the same process as that of the first embodiment is performed, and the access of the reader 2 to the access destination device 6 is denied.

In Step S121, the access destination device 6 transmits the access time at which the tag management device 4 or the reader 2 accessed the access destination device 6 and the reader identification information 241 of the reader 2 to the access time management device 9, and stores them in the storage unit of the access time management device 9 as the access time 911 and the reader identification information 912. If the storage unit of the access time management device 9 stores the reader identification information 241 of the reader 2 currently accessing, the access time management device 9 updates the access time 911. If the reader 2 reads the NFC tag 3 for the first time, the access time management device 9 stores the reader identification information 241 of the reader 2 currently accessing as the reader identification information 912.

In Step S122, the access time management device 9 searches the stored pieces of reader identification information 912 in the storage unit for the reader identification information 241 of the reader 2 currently accessing. If the same reader identification information 912 as the reader identification information 241 is registered, the access time management device 9 determines whether a predetermined time has passed since the last attempt of the reader 2 to access the access destination device 6 at the current attempt of the reader 2 to access the access destination device 6. If the access time management device 9 determines that the predetermined time has not passed, the access time management device 9 transmits a determination result "valid" (or access "permitted") to the access destination device 6. If the access time management device 9 determines that the access is "valid," access of the reader 2 is permitted, and the reader 2 is allowed to display information such as a web page on the display unit 23 of the reader 2 via the tag management device 4 or directly.

Note that the access time management device 9 transmits the determination result "valid" (or access "permitted") to the access destination device 6 also when the reader 2 reads the NFC tag 3 for the first time.

If the access time management device 9 determines that the predetermined time has passed, the access time management device 9 transmits a determination result "invalid" (or access "denied") to the access destination device 6. Thereafter, the execution of the subsequent processes is suspended. For the suspension of the process, the access destination device 6 transmits, for example, an output such as a display for indicating an error or a warning to the reader 2 via the tag management device 4 and displays the output on the display unit 23.

As described above, if the current attempt to access the access destination device 6 is a second or subsequent attempt without reading the electronic tag 3, the reader 2 is permitted to access the access destination device 6, provided that a predetermined time has not passed since the last attempt to access the access destination device 6 by reading the NFC tag 3 at the time of the current attempt. The predetermined time for the determination in Step S122 can be set in advance, dynamically, or in accordance with the mode of the service. The predetermined time used in Step S122 may be set as elapsed time in days, hours, minutes, or seconds, for example. Alternatively, whether the predetermined time has passed may be whether a preset absolute time point, such as 12 o'clock or 24 o'clock, has passed.

In the access control system 1B of the third embodiment, the NFC tag 3 is placed in, for example, a golf club or any other place distant from home. When a visitor brings the reader 2 close to or into contact with the NFC tag 3, the visitor is permitted to access a certain web page only for a predetermined time or on condition that the visitor makes regular access while limiting a location where the reader 2 can access the web page or requiring a visit to a certain location.

While some embodiments of the present disclosure have been described above, these embodiments can be implemented in various other forms, and some of the features can be omitted, substituted, or altered without departing from the spirit of the invention. The embodiments and their variations are included in the scope and spirit of the invention, and are also included in the invention described in the claims and the scope of equivalents thereof.

For example, the tag management device 4, the parameter determination device 5, the access destination device 6, the one-time ID determination device 7, the read timing management device 8, and the access time management device 9 are configured as separate devices, but some of them may be configured as a single device or system.

The access time management device 9 described in the third embodiment may be communicatively connected to another access destination device 6 (not shown). In this case, the access time management device 9 may store the second URL (452) of the access destination device 6 in the storage unit in association with the access time 911 and the reader identification information 912.

In Step S121, if the storage unit of the access time management device 9 stores the reader identification information 241 (912) of the reader 2 currently accessing, the access time 911 and the reader identification information 912 may not be stored (i.e., may not be rewritten or updated). In this case, the access time 911 is the time when the reader 2 first accessed the access destination device 6. In this way, the reader 2 can access the access destination device 6 many times using the second URL 432 or the second URL 432 and the second unique information 433 only for a predetermined time or period after the first reading of the NFC tag 3 and access to the access destination device 6, without need of re-reading the NFC tag 3.

The system configurations described in the first to third embodiments may be combined as needed. For example, the access control system may include the read timing management device 8 of the second embodiment and the access time management device 9 of the third embodiment.

The present disclosure includes, for example, the following aspects.
[1] An access control system including:
   a tag management device that is identified by a first URL and stores tag identification information and a second URL in association with each other;
   a parameter determination device;
   an access destination device identified by the second URL; and
   a one-time ID determination device that issues second unique information to the tag management device, wherein
   the tag management device
      acquires the tag identification information and first unique information from an electronic tag via a reader,
      acquires the second unique information from the one-time ID determination device when the parameter determination device determines that the first unique information is acquired for the first time, and
      accesses the access destination device of the second URL corresponding to the tag identification information by adding the second unique information to the second URL,
      the tag management device and the reader are permitted to access the access destination device when the one-time ID determination device determines that the second unique information transmitted by the access destination device is acquired for the first time,
   the first unique information is unique information issued for each reading process by the reader, and
   the second unique information is unique information issued each time the parameter determination device determines that the first unique information is acquired for the first time.
[2] The access control system of the item [1] above, further including:
   a read timing management device that stores the tag identification information and time when the reader reads the tag identification information, wherein
   the tag management device is permitted to access the access destination device if a predetermined time has passed since when the reader reads the most recently acquired tag identification information at the time the reader reads the currently acquired tag identification information.
[3] The access control system of the item [1] above, further including:
   an access time management device that stores time when the reader accesses the access destination device and reader identification information of the reader, wherein
   if the current attempt to access the access destination device is a second or subsequent attempt without reading the electronic tag, the reader is permitted to access the access destination device, provided that a predetermined time has not passed since the last attempt to access the access destination device by reading the electronic tag at the time of the current attempt.
[4] An access control method for an access control system including
   a tag management device that is identified by a first URL and stores tag identification information and a second URL in association with each other,
   a parameter determination device,
   an access destination device identified by the second URL, and
   a one-time ID determination device that issues second unique information to the tag management device,
   the access control method including:
      allowing the tag management device to
         acquire the tag identification information and first unique information from an electronic tag via a reader,
         acquire the second unique information from the one-time ID determination device when the parameter determination device determines that the first unique information is acquired for the first time; and
         access the access destination device of the second URL corresponding to the tag identification information by adding the second unique information to the second URL; and
      permitting the tag management device and the reader to access the access destination device when the one-time ID determination device determines that the second unique information transmitted by the access destination device is acquired for the first time, wherein
      the first unique information is unique information issued for each reading process by the reader, and
      the second unique information is unique information issued each time the parameter determination device determines that the first unique information is acquired for the first time.
[5] An access control program to be run on a computer of an access control system including
   a tag management device that is identified by a first URL and stores tag identification information and a second URL in association with each other,
   a parameter determination device,
   an access destination device identified by the second URL, and
   a one-time ID determination device that issues second unique information to the tag management device,
   the access control program causing the computer of the access control system to:
      acquire the tag identification information and first unique information from an electronic tag via a reader;
      acquire the second unique information from the one-time ID determination device when the parameter determination device determines that the first unique information is acquired for the first time;
      access the access destination device of the second URL corresponding to the tag identification information by adding the second unique information to the second URL; and
      permit the tag management device and the reader to access the access destination device when the one-time ID determination device determines that the second unique information transmitted by the access destination device is acquired for the first time, wherein
   the first unique information is unique information issued for each reading process by the reader, and
   the second unique information is unique information issued each time the parameter determination device determines that the first unique information is acquired for the first time.

### DESCRIPTION OF REFERENCE CHARACTERS

- 1, 1A, 1B: Access Control System
- 2: Reader
- 3: NFC Tag
- 4: Tag Management Device
- 4-1: Contractor Terminal
- 5: Parameter Determination Device
- 6: Access destination device
- 7: One-Time ID Determination Device
- 8: Read Timing Management Device
- 9: Access Time Management Device
- 21: Control Unit
- 22: Communication Unit
- 23: Display Unit
- 24: Storage Unit
- 41: Control Unit
- 42: Communication Unit
- 43: Storage Unit
- 101: Computer
- 102: CPU
- 103: Main Storage
- 104: Auxiliary Storage
- 105: Interface
- 241: Reader Identification Information
- 311: First URL
- 312: Tag Identification Information
- 313: First Unique Information
- 431: Tag Identification Information
- 432: Second URL
- 433: Second Unique Information
- 511: First Unique Information
- 711: Second Unique Information
- 712: Access Flag
- 811: Tag Identification Information
- 812: Read Time
- 911: Access Time
- 912: Reader Identification Information

## Claims

1. An access control system comprising:
a tag management device that is identified by a first URL and stores tag identification information and a second URL in association with each other;
a parameter determination device;
an access destination device identified by the second URL; and
a one-time ID determination device that issues second unique information to the tag management device, wherein
the tag management device
acquires the tag identification information and first unique information from an electronic tag via a reader,
acquires the second unique information from the one-time ID determination device when the parameter determination device determines that the first unique information is acquired for the first time, and
accesses the access destination device of the second URL corresponding to the tag identification information by adding the second unique information to the second URL,
the tag management device and the reader are permitted to access the access destination device when the one-time ID determination device determines that the second unique information transmitted by the access destination device is acquired for the first time,
the first unique information is unique information issued for each reading process by the reader, and
the second unique information is unique information issued each time the parameter determination device determines that the first unique information is acquired for the first time.

2. The access control system of claim 1, further comprising:
a read timing management device that stores the tag identification information and time when the reader reads the tag identification information, wherein
the tag management device is permitted to access the access destination device if a predetermined time has passed since when the reader reads the most recently acquired tag identification information at the time the reader reads the currently acquired tag identification information.

3. The access control system of claim 1, further comprising:
an access time management device that stores time when the reader accesses the access destination device and reader identification information of the reader, wherein
if the current attempt to access the access destination device is a second or subsequent attempt without reading the electronic tag, the reader is permitted to access the access destination device, provided that a predetermined time has not passed since the last attempt to access the access destination device by reading the electronic tag at the time of the current attempt.

4. An access control method for an access control system including
a tag management device that is identified by a first URL and stores tag identification information and a second URL in association with each other,
a parameter determination device,
an access destination device identified by the second URL, and
a one-time ID determination device that issues second unique information to the tag management device,
the access control method comprising:
allowing the tag management device to
acquire the tag identification information and first unique information from an electronic tag via a reader,
acquire the second unique information from the one-time ID determination device when the parameter determination device determines that the first unique information is acquired for the first time; and
access the access destination device of the second URL corresponding to the tag identification information by adding the second unique information to the second URL; and
permitting the tag management device and the reader to access the access destination device when the one-time ID determination device determines that the second unique information transmitted by the access destination device is acquired for the first time, wherein
the first unique information is unique information issued for each reading process by the reader, and
the second unique information is unique information issued each time the parameter determination device determines that the first unique information is acquired for the first time.

5. An access control program to be run by a computer of an access control system including
a tag management device that is identified by a first URL and stores tag identification information and a second URL in association with each other,
a parameter determination device,
an access destination device identified by the second URL, and
a one-time ID determination device that issues second unique information to the tag management device,
the access control program causing the computer of the access control system to:
acquire the tag identification information and first unique information from an electronic tag via a reader;
acquire the second unique information from the one-time ID determination device when the parameter determination device determines that the first unique information is acquired for the first time;
access the access destination device of the second URL corresponding to the tag identification information by adding the second unique information to the second URL; and
permit the tag management device and the reader to access the access destination device when the one-time ID determination device determines that the second unique information transmitted by the access destination device is acquired for the first time, wherein
the first unique information is unique information issued for each reading process by the reader, and
the second unique information is unique information issued each time the parameter determination device determines that the first unique information is acquired for the first time.
